# EUROPÄISCHE PATENTSCHRIFT

(11) **EP 0 688 818 B1**
(45) Veröffentlichungstag und Bekanntmachung des Hinweises auf die Patenterteilung: **24.03.1999**
(21) Anmeldenummer: 95108704.8
(22) Anmeldetag: 07.06.1995
(51) Int. Cl.: C08K 9/08, C08J 3/20, A61K 6/00

(54) **Präparationen von monodispersen kugelförmigen Oxidpartikeln**
Preparations of monodispersed spherical oxide particles
Préparations des particules d'oxyde sphériques monodispersées

(30) Priorität: 24.06.1994 DE 4422118
(43) Veröffentlichungstag der Anmeldung: 27.12.1995
(73) Patentinhaber: MERCK PATENT GmbH, 64293 Darmstadt (DE)
(72) Erfinder: Anselmann, Ralf, Dr., D-64839 Münster-Altheim (DE); Griessmann, Carsten, D-64846 Gross-Zimmern (DE); Loch, Manuela, D-55627 Merxheim (DE); Marquard, Kurt, Dr., 64354 Reinheim (DE)

(56) Entgegenhaltungen:
- EP-A- 0 216 278
- EP-A- 0 451 504
- WO-A-93/25611
- WO-A-94/07945

## Beschreibung

Die Erfindung betrifft Präparationen von monodispersen kugelförmigen Oxidpartikeln, mit denen es besonders leicht gelingt, die Oxidpartikel homogen in Polymersystemen zu dispergieren.

Kugelförmige Oxidpartikel, insbesondere SiO₂-Partikel, aber auchTiO₂-, ZrO₂- und Al₂O₃-Partikel, werden in vielfältiger Weise in technischen und wissenschaftlichen Anwendungen eingesetzt. Es ist bekannt, daß besonders vorteilhafte Anwendungseigenschaften dann resultieren, wenn diese Partikel in monodisperser Form vorliegen, also bei vorbestimmter Teilchengröße eine möglichst geringe und enge Teilchengrößenstreuung aufweisen. Eine wesentliche technische Anwendung von monodispersen kugelförmigen Oxidpartikeln ist beispielsweise der Einsatz als Füll- und Modifizierungsmittel in Polymermaterialien. Hierbei haben die Partikel vielfach nicht nur Ersatz- und Verdünnungsfunktion, sondern verleihen dem polymeren Matrix-Material erst bestimmte Eigenschaften oder Funktionen. So werden derartige Partikel als optische Diffusoren in Einbettmassen für Leuchtdioden oder als Wärmespannungen vermindernde Füllstoffe in transparenten Vergußmassen für sonstige optische, elektrooptische und optoelektronische Bauteile eingesetzt. In Kunststofffolien, etwa für magnetische Aufzeichnungsmittel, finden diese Partikel Anwendung zur Verbesserung der Gleiteigenschaften. Weiterhin können Sie als Opakifizierungsmittel in Dentalmassen dienen. Bezüglich derartiger Anwendungen, bei denen monodisperse kugelförmige Oxidpartikel aufgrund ihrer Monodispersität besonders vorteilhaft sind, sei beispielsweise auf die Patentdokumente WO 94/07 948, WO 93/25 611 und EP 0 236 945 A2 verwiesen.

Beim technischen Einsatz erfolgt die Einarbeitung dieser Oxidpartikel in polymere Bindemittelsysteme im allgemeinen nicht in Form der nativen Pulver. Dies liegt daran, daß die praktische Handhabung und insbesondere die Herstellung homogener agglomeratfreier und nicht sedimentierender Dispersionen der Oxidpartikelpulver mit den Polymersystemen vor allen Dingen für den Anwender schwierig ist. Die Oxidpartikel werden daher vorzugsweise in anwendungsspezifisch prädispergierter Form zur Verfügung gestellt, wodurch die spätere Einarbeitung in die vorgesehenen Polymersysteme erleichtert werden soll. Üblich sind beispielsweise Dispersionen in aliphatischen Alkoholen, Glykolen und Oligoglykolen. Gelegentlich dienen auch Bestandteile der polymeren Bindemittelsysteme, in die später eingearbeitet werden soll, als Dispergiermedium.

In derartigen Dispersionen neigen allerdings die Oxidpartikel zur Sedimentation, insbesondere bei längerer Lagerung. Es hat sich gezeigt, daß gerade bei hoch monodispersen kugelförmigen Oxidpartikeln Sedimente mit hoch geordneten Strukturen entstehen, die in etwa dichtesten Kugelpackungen gleichen. Derartige Sedimente lassen sich nur sehr schwer wieder redispergieren, wobei es kaum gelingt, den ursprünglichen Zustand einer homogenen agglomeratfreien Dispersion wieder zu erreichen.

Ein weiterer Nachteil des Einsatzes der Oxidpartikel in prädispergierter Form ist, daß bei einem Oxidpartikelgehalt von in aller Regel nicht mehr als 50 Gew.-% nicht unerhebliche Mengen an Dispergiermedium in das Polymersystem miteingebracht werden. Hierbei sind Kompatibilitätsprobleme zu beachten und in jedem Fall sind die Rezepturen entsprechend anzupassen.

Es bestand daher die Aufgabe, monodisperse kugelförmige Oxidpartikel in einer solchen Form bereitzustellen, die selbst stabil ist und mit der sich die Partikel problemlos homogen in Polymersysteme einarbeiten lassen, ohne dabei unerwünschte Mengen an weiteren Hilfsstoffen miteinzubringen.

Es wurde nun gefunden, daß Präparationen von monodispersen kugelförmigen Oxidpartikeln mit Partikeldurchmesser zwischen 10 nm und 10 um und einem im wesentlichen nichtflüchtigen Bindemittel in Form eines freifließenden Pulvers aus Agglomeraten mit Durchmesser zwischen 1 µm und 500 µm, in denen 70 bis 95 Gew.-% Oxidpartikel und 30 bis 5 Gew.-% Bindemittel vorliegen, diese Anforderungen vorzüglich erfüllen. Derartige Präparationen lassen sich etwa in der Weise erhalten, daß man die Oxidpartikel mit dem Bindemittel im entsprechenden Verhältnis zusammen mit einem bei Temperaturen zwischen 0 und 120 °C und einem Druck zwischen 1 und 0,1 barflüchtigen Lösungsmittel homogen vermischt, wobei Bindemittel und Lösungsmittel im Massenverhältnis 1:1 bis 1:100 vorliegen, und dann aus der erhaltenen Suspension bzw. Dispersion das Lösungsmittel destillativ entfernt.

Gegenstand der Erfindung sind daher wie vorstehend charakterisierte Präparationen von monodispersen kugelförmigen Oxidpartikeln.

Gegenstand der Erfindung ist weiterhin ein Verfahren zur Herstellung von derartigen Präparationen, bei denen man 70 bis 95 Gew.-% monodisperse kugelförmige Oxidpartikel mit Partikeldurchmesser zwischen 10 nm und 10 µm mit 30 bis 5 Gew.-% eines im wesentlichen nichtflüchtigen Bindemittels zusammen mit einem bei erhöhter Temperatur und/oder reduziertem Druck flüchtigen Lösungsmittel homogen vermischt, wobei Bindemittel und Lösungsmittel im Massenverhältnis 1:1 bis 1:100 vorliegen, und dann aus der erhaltenen Suspension bzw. Dispersion das Lösungsmittel destillativ entfernt, wobei man ein freifließendes Pulver aus Agglomeraten mit Durchmesser zwischen 1 µm und 500 µm erhält.

Für die erfindungsgemäßen Präparationen sind im Prinzip alle monodispersen kugelförmigen Oxidpartikel geeignet, deren Partikeldurchmesser im Bereich zwischen 10 nm und 10 µm liegt. Der Begriff monodispers ist so zu verstehen, daß die Partikel eines bestimmten Durchmessers eine möglichst geringe, in eine sehr engen Bereich liegende Teilchengrößenstreuung aufweisen. Die monodispersen kugelförmigen Oxidpartikel weisen eine Standardabweichung der Teilchendurchmesser von weniger als 10 %, bevorzugt von weniger als 5 % auf. Vorzugsweise liegen die Partikelgrößen im Bereich zwischen 100 nm und 1 µm, insbesondere zwischen 250 nm und 500 nm. Als Grundmaterialien der Partikel kommen im Prinzip alle üblichen festen Oxide bzw. oxidischen Materialien, wie insbesondere Metalloxide in Frage. Bevorzugt sind Oxidpartikel, die aus SiO₂, TiO₂, ZrO₂, Al₂O₃ oder entsprechenden Mischoxiden bestehen. Besonders bevorzugt sind Partikel aus SiO₂ und TiO₂, insbesondere aber aus SiO₂. Die Art ihrer Herstellung ist an sich beliebig, sofern die Partikel monodispers und kugelförmig und vorzugsweise desweiteren kompakt und unporös sind.

Die erfindungsgemäß zu verwendenden monodispersen kugelförmigen Oxidpartikel sind an sich aus dem Stand der Technik bekannt. Besonders geeignet sind Oxidpartikel, die sich durch hydrolytische Polykondensation aus Alkoholatverbindungen entsprechender Elemente erhalten lassen und dabei in Form monodisperser kompakter kugelförmiger Partikel anfallen. Die grundlegenden Reaktionsbedingungen zur Herstellung von SiO₂-Partikeln durch hydrolytische Polykondensation sind beispielsweise aus den Publikationen W. Stöber et al. in J. Colloid and Interface Science 26, 62 (1968) und 30, 5168 (1969) sowie dem US-Patent 3,634,588 zu entnehmen. Nach dieser Methode können auch andere Partikel, wie z.B. TiO₂ oder ZrO₂ hergestellt werden. Für die Herstellung von hochmonodispersen unporösen kugelförmigen SiO₂-Partikeln, die eine Standardabweichung von nicht mehr als 5 % aufweisen, wird auf EP 0 216 278 hingewiesen, die ein entsprechend abgestelltes Herstellungsverfahren auf Basis von hydrolytischer Polykondensation offenbart. Kern des Verfahrens, das für die Herstellung der Partikel gemäß vorliegender Erfindung besonders bevorzugt wird, ist eine zweistufige Vorgehensweise. Hierbei wird zunächst durch hydrolytische Polykondensation von Tetraalkoxysilanen in wäßrig-alkoholisch-ammoniakalischem Medium ein Sol bzw. eine Suspension von Primärteilchen gebildet, die man daran anschließend durch dosierte Zugabe von weiterem Tetraalkoxysilan auf die gewünschte Endgröße bringt. Das Verfahren gemäß EP 0 216 278 ist ohne weiteres und mit gleichem Ergebnis auf andere Oxide und auch auf Mischoxidsysteme übertragbar. Ein sinngemäßes Verfahren zur Herstellung verschiedener Metalloxide in Form sphärischer Partikel mit enger Teilchengrößenverteilung ist EP 0 275 688 zu entnehmen. Weiterhin ist ein entsprechendes Zweistufenverfahren zur Herstellung unterschiedlicher Metalloxide und auch Mischoxide, die darüber hinaus an der Oberfläche noch glykolische Gruppen chemisch gebunden haben, in EP 0 391 447 beschrieben.

Eine für den jeweiligen Anwendungszweck gegebenenfalls vorteilhafte organische Modifizierung der Partikel an der Oberfläche kann in völliger Übereinstimmung mit Methoden vorgenommen werden, wie sie für die Herstellung von als chromatographische Sorbentien gebräuchlichen Kieselgelen bekannt sind. Gängige Modifizierungsmittel sind Organotrialkoxysilane, wie z.B. Methyltriethoxysilan, Ethyltriethoxysilan, Octyltriethoxysilan, Octadecyltriethoxysilan, Mono- oder Polyfluoroalkyltriethoxysilan oder auch Silane mit funktionalisierten Organogruppen, die eine spätere weitere Modifizierung durch kovalente Bindungsknüpfung in bekannter Weise ermöglichen. Im letzteren Fall sind solche Organotrialkoxysilane im Hinblick auf den erfindungsgemäßen Einsatz der Partikel als Füllstoffe in polymeren oder polymerisierbaren Systemen bevorzugt, die solche funktionelle Gruppen aufweisen, mit denen sich eine kovalente Einbindung in das Polymermaterial erreichen läßt. Beispiele hierfür sind Trimethoxyvinylsilan, Triethoxyvinylsilan und 3-Glycidoxypropyltrimethoxysilan, 2-(3,4-Epoxycyclohexyl)-ethyltrimethoxysilan, [2-(3,4-Epoxy-4-methylcyclohexyl)-propyl]-methyldiethoxysilan sowie Silane mit Hydroxyl-, Carboxyl-, Epoxy- und Carbonsäureestergruppen tragenden organischen Resten. Selbstverständlich kann diese organische Modifizierung völlig analog auch bei anderen Oxiden als SiO₂ und/oder mit entsprechenden Organoalkoxiden andere Elemente vorgenommen werden. Im Falle einer Oberflächenmodifizierung der Partikel durch kovalent gebundene organische Gruppen werden die Eigenschaften der Teilchen, insbesondere hinsichtlich Kugelform und Monodispersität nicht beeinflußt, während die vorteilhaften Eigenschaften, die mit einer derartigen Modifizierung einhergehen, wahrgenommen werden können.

Die erfindungsgemäßen Präparationen der monodispersen kugelförmigen Oxidpartikel liegen in Form eines freifließenden Pulvers vor. Dieses wird gebildet von Agglomeraten der Oxidpartikel, deren Durchmesser zwischen 1 µm und 500 µm liegt. Die Größe der Agglomerate wird im jeweiligen Fall von der Größe der Primärpartikel sowie der Herstellungsweise bestimmt. Vorzugsweise liegt die Größe der Agglomerate zwischen 10 µm und 300 µm, insbesondere um ca. 100 µm. In diesen Agglomeraten sind die Oxidpartikel durch ein Bindemittel miteinander verbunden, wobei 70 bis 95 Gew.-% Oxidpartikel und 30 bis 5 Gew.-% Bindemittel vorliegen. Vorzugsweise liegen in den Agglomeraten 90 bis 95 Gew.-% Oxidpartikel und 10 bis 5 Gew.-% Bindemittel vor. Der Begriff Bindemittel ist im weitesten Sinne zu verstehen und ist nur der Einschränkung unterworfen, daß das Bindemittel im Hinblick auf die Herstellungsweise der erfindungsgemäßen Präparationen im wesentlichen nichtflüchtig ist bzw. aus im wesentlichen nichtflüchtigen Bestandteilen zusammengesetzt ist. Als Bindemittel entsprechend geeignete Substanzen bzw. Substanzgemische sind solche anzusehen, die bei Temperaturen zwischen 0 und 120 °C und einem Druck zwischen 1 und 0,1 bar nichtflüchtig sind. Entsprechende Bindemittel im engeren Sinne sind etwa die aus der Kunststoff- und Lackindustrie bekannten und üblichen Harze, Kunstharze, Monomere, Oligomere, Polymere, Copolymere und polymerisierbaren Systeme. Typische Bindemittel dieser Art basieren auf Polyolefinen, Polyacrylaten, Vinylpolymeren, Polyamiden, Polysiloxanen, Polyestern, Polyethern, Polyurethanen und Epoxidharzsystemen. Als Bindemittel im weiteren Sinne gelten auch Öle, Fette und Wachse, etwa auf Paraffinbasis, hochsiedende Glykole, Oligoglykole und Polyglykole sowie deren Ester- und Etherderivate.

Bevorzugt sind jeweils solche Bindemittel, denen im Hinblick auf den späteren Einsatz der erfindungsgemäßen Präparationen etwa als Füllmittel in Polymermaterialien eine besondere Kompatibilität oder gar Affinität zu entsprechenden Materialien und Systemen zukommt. So ist es zweckmäßig, die Polymersysteme selbst bzw. Bestandteile hieraus, in denen die Oxidpartikel zum Einsatz gelangen sollen, als Bindemittel für die erfindungsgemäßen Präparationen auszuwählen. Epoxidharzsysteme, etwa für Vergußmassen von Leuchtdioden, bzw. deren Komponenten eignen sich demnach vorzüglich als Bindemittel für erfindungsgemäße Präparationen von monodispersen kugelförmigen Oxidpartikeln, die als optische Diffusoren dienen sollen. Monomere oder oligomere Polyesterrohstoffe sowie Glykole und Oligoglykole eignen sich besonders als Bindemittel, wenn die Oxidpartikel in Polyesterrohstoffe für die Folienherstellung eingearbeitet werden sollen. Insgesamt kann es sehr vorteilhaft sein auf durchgängige Kompatibilität bzw. Affinität, beginnend bei einer etwaigen Oberflächenmodifizierung der Oxidpartikel über die Auswahl des Bindemittels bis hin zum Polymersystem des Einsatzes, zu achten. Die Möglichkeit der kovalenten Bindungsknüpfung über entsprechende reaktive Gruppen tragende Silanisierungsmittel für die Oberflächenmodifizierung der Oxidpartikel zum Bindemittel und von dort aus weiter zum polymeren Matrixmaterial, ist hierbei besonders bevorzugt.

Die erfindungsgemäßen Präparationen der monodispersen kugelförmigen Oxidpartikel mit dem Bindemittel sind beispielsweise erhältlich, in dem man die Oxidpartikel im entsprechenden Verhältnis mit dem Bindemittel und weiterhin einem bei erhöhter Temperatur, etwa zwischen 0 und 120 °C, und/oder reduziertem Druck, etwa zwischen 1 und 0,1 bar, flüchtigen Lösungsmittel vermischt und dann aus der erhaltenen Suspension bzw. Dispersion das Lösungsmittel destillativ entfernt. Hierbei erhält man die erfindungsgemäßen Präparationen in Form von freifließenden Pulvern aus Agglomeraten mit Durchmesser zwischen 1 µm und 500 µm. Bei dem Mischungsvorgang wählt man zweckmäßigerweise das Massenverhältnis von Bindemittel zu Lösungsmittel im Bereich 1:1 bis 1:100. Ein hoher Anteil von Lösungsmittel ist insbesondere dann notwendig, wenn im Verhältnis zum Anteil an Oxidpartikel nur sehr wenig Bindemittel, z.B. 5 bis 10 Gew.-%, eingesetzt werden soll, damit eine vollständige Benetzung und Impregnierung der Partikel mit dem Bindemittel erreicht wird. Als Lösungsmittel eignen sich alle üblichen organischen Lösungsmittel aber auch Wasser, sofern diese im Einzelfall geeignet sind, das jeweilige Bindemittel ausreichend zu lösen oder zu dispergieren. Als organische Lösungsmittel kommen in Frage Methanol, Ethanol, Aceton, Ether, Essigester, aliphatische Kohlenwasserstoffe wie Pentan und Hexan, Petrolether, Benzol, Toloul, Xylol und Gemische dieser Lösungsmittel.

Der Mischungsvorgang erfolgt zweckmäßigerweise in der Form, daß man die Oxidpartikel in einem Gemisch aus Bindemittel und Lösungsmittel dispergiert. Es kann auch günstig sein, daß man die Partikel zuerst in dem Lösungsmittel suspendiert und dann das Bindemittel eindispergiert. Diese Vorgehensweise ist insbesondere bei der Verwendung von Wasser als Lösungsmittel von Vorteil. Der Mischvorgang erfolgt in gebräuchlichen, handelsüblichen Mischapparaturen bzw. Homogenisatoren geeigneter Kapazität.

Hat man eine homogene Dispersion von Oxidpartikel, Lösungsmittel und Bindemittel erhalten, so wird hieraus das Lösungsmittel destillativ entfernt. Dies kann zweckmäßigerweise durch destillative Trocknung am Rotationsverdampfer, durch Dünnschichtverdampfung oder durch Sprühtrocknung erfolgen. Hierfür geeignete Apparaturen sind dem Fachmann bekannt und allgemein gebräuchlich. Zum Schluß kann die so gewonnene erfindungsgemäße Präparation im Bedarfsfalle noch zerkleinert und zum Erreichen einer einheitlichen Agglomeratpartikelgröße gesiebt bzw. klassiert werden.

In den erfindungsgemäßen Präparationen liegen die monodispersen kugelförmigen Oxidpartikel mit dem Bindemittel umhüllt und miteinander zu den Agglomeratpartikeln verbunden vor.

Gegenüber den Oxidpartikelpulvern als solchen bzw. daraus hergestellten flüssigen Dispersionen besitzen die erfindungsgemäßen Präparationen, überraschende vorteilhafte Anwendungseigenschaften, insbesondere im Hinblick auf die Einarbeitung der Partikel in Polymersysteme. Zum einen sind die Präparationen bei Lagerung auch über längere Zeiträume hinweg, keinen Veränderungen bezüglich Zusammensetzung und Konstitution unterworfen. Entmischungs- und Sedimentationsvorgänge, wie sie bei üblichen flüssigen Dispersionen der Oxidpartikel beobachtet werden, können nicht auftreten. Dementsprechend sind Vorbehandlungsmaßnahmen vor dem bestimmungsgemäßen Einsatz, wie etwa Redispergieren und Homogenisieren nicht erforderlich. Zum anderen hat sich herausgestellt, daß sich mit Hilfe der erfindungsgemäßen Präparationen die monodispersen kugelförmigen Oxidpartikel sehr leicht in Polymersysteme aber auch beliebige andere Zubereitungen einarbeiten lassen. Hierbei lassen sich die Oxidpartikel ohne weiters homogen in den Matrixmaterialien verteilen. Die Oxidpartikel-Bindemittel-Agglomerate zerfallen problemlos und vollständig in die Einzelpartikel. Dies ist dadurch zu erklären, daß die Oxidpartikel in den Agglomeraten aufgrund ihrer Umhüllung mit dem Bindemittel sozusagen bereits in vordispergierter Form vorliegen. Der bekanntermaßen schwierige Vorgang der Benetzung und Verbindung der unbehandelten Oxidpartikel mit dem organischen Medium fällt hier weg. Der Vorgang der homogenen Dispergierung der Oxidpartikel in der Polymermatrix ist dann besonders effektiv, wenn es sich bei dem Bindemittel der erfindungsgemäßen Präparation um dasselbe, ein gleichartiges oder ein mit dem Polymersystem kompatibles Material handelt. Bei dem vergleichsweise geringen Gehalt der Präparation an Bindemittel ist darüber hinaus der Eintrag in das Polymersystem weitestgehend unkritisch; entsprechende Rezepturveränderungen bzw. Anpassungen sind nicht erforderlich oder problemlos.

Insgesamt sind Lagerung und Handhabung der erfindungsgemäßen Präparationen in Form freifließender Pulver problemlos und anwenderfreundlich.

### Beispiel 1

In einem Labordispergator (Ultraturax) werden 700 g eines monodispersen sphärischen Kieselgels von 1 µm Korngröße (herstellt nach EP 0 216 278), das durch Behandlung mit einem Epoxy-funktionalisiertem Silan eine Oberflächenbelegung mit Epoxygruppen aufweist (Monospher® 1000 E, Fa. E. Merck, Darmstadt) in 3,5 l Wasser dispergiert. In diese Dispersion werden dann 300 g einer Epoxidharz-Härterkomponente (Araldit MY 790) 2 Stunden lang eindispergiert. Die Aufnahme des Harzes wird durch die chemisch verwandte Oberflächenbelegung des Kieselgels bewirkt.

Die Dispersion wird unter Standardbedingungen der Sprühtrocknung unterzogen. Nach weiterer Trocknung des Produktes im Vakuum bei 75 °C über 15 Stunden und Passieren durch ein Sieb mit 300 µm Maschenweite erhält man ein freifließendes Pulver.

Eine Probe des Produktes wird auf einem Objektträger mit Epoxidharz verrieben. Unter dem Mikroskop zeigt sich eine gleichmäßige agglomeratfreie Verteilung der Kieselgelpartikel in dem Harz.

### Beispiel 2

300 g einer Epoxidharz-Härterkomponente (Araldit MY 790) werden in 1200 g Aceton gelöst. Unter Rühren werden 700 g eines Epoxy-funktionalisierten monodispersen sphärischen Kieselgels von 1 µm Korngröße (Monospher® 1000 E, Fa. E. Merck, Darmstadt) eingetragen und das Reaktionsgefäß 1 Stunde lang im Ultraschallbad behandelt.

Aus der so erhaltenen Dispersion wird das Aceton am Rotationsverdampfer abgezogen und das Produkt dann 15 Stunden bei 75 °C im Vakuum getrocknet. Durch Passieren durch ein 300 µm Sieb erhält man das Produkt in Form eines freifließenden Pulvers.

### Beispiel 3 (nicht erfindungsgemäß)

600 g eines monodispersen sphärischen Kieselgels mit 250 nm Korngröße (hergestellt nach EP 0 216 278) werden in 1750 ml Ethanol dispergiert. In dieser Dispersion werden dann unter intensivem Rühren 275 g Ethylenglycol gelöst. Aus der Dispersion wird am Rotationsverdampfer oder am Dünnschichtverdampfer das Ethanol abgezogen. Nachtrocknung und Sieben erfolgen wie in den vorstehenden Beispielen.

### Beispiel 4 (nicht erfindungsgemäß)

100 g eines monodispersen sphärischen Kieselgels mit 500 nm Korngröße (hergestellt nach EP 0 216 278) werden in eine Lösung aus 176 g Polyethylenglykoldimethylether 500 und 2,1 l Wasser dispergiert. Aus der Dispersion wird das Wasser am Dünnschichtverdampfer entfernt. Nachtrocknung und Sieben erfolgen wie in den vorstehenden Beispielen.

### Beispiel 5

600 g eines monodispersen sphärischen Kieselgels von 100 nm Korngröße (hergestellt nach EP 0 216 278), das durch Behandlung mit einem Methylmethacrylat-funktionalisiertem Silan eine Oberflächenbelegung mit Methylmethacrylatgruppen aufweist, werden in einer Mischung aus 1500 g Essigsäureethylester und 32 g eines Acrylatharzes dispergiert. Aus der Dispersion wird das Lösungsmittel am Rotationsverdampfer abgezogen. Nachtrocknung und Sieben erfolgen wie in den vorstehenden Beispielen.

## Patentansprüche

1. Präparationen von
a) monodispersen kugelförmigen Oxidpartikeln mit einem Partikeldurchmesser zwischen 10 nm und 10 µm, wobei die Standardabweichung des Partikeldurchmessers weniger als 10 % beträgt, und
b) einem Bindemittel, welches bei Temperaturen zwischen 0 und 120 °C und einem Druck von 1 bis 0,1 bar nicht flüchtig ist,
in Form eines freifließenden Pulvers, bestehend aus Agglomeraten mit einem Durchmesser von 1 µm und 500 µm, in denen die Partikel durch das Bindemittel miteinander verbunden sind und in denen 70 bis 95 Gew.-% Oxidpartikel und 30 bis 5 Gew.-% Bindemittel vorliegen, erhältlich dadurch, daß man die Oxidpartikel mit dem Bindemittel im entsprechenden Verhältnis zusammen mit einem bei Temperaturen zwischen 0 und 120 °C und einem Druck zwischen 1 und 0,1 bar flüchtigen Lösungsmittel homogen vermischt, wobei Bindemittel und Lösungsmittel im Massenverhältnis 1 : 1 bis 1 : 100 vorliegen, und dann aus der erhaltenen Suspension bzw. Dispersion das Lösungsmittel destillativ entfernt.

2. Präparationen nach Anspruch 1, dadurch gekennzeichnet, daß die Oxidpartikel aus SiO₂, TiO₂, ZrO₂, Al₂O₃ oder entsprechenden Mischoxiden bestehen.

3. Präparationen nach Anspruch 2, dadurch gekennzeichnet, daß die Oxidpartikel durch hydrolytische Polykondensationen von Alkoxiden erhalten sind.

4. Präparationen nach Anspruch 3, dadurch gekennzeichnet, daß die Oxidpartikel eine Oberflächenmodifizierung durch kovalent gebundene organische Gruppen aufweisen.

5. Präparationen nach den Ansprüchen 1 bis 4, dadurch gekennzeichnet, daß das Bindemittel ein lösliches Polymer oder ein polymerisierbares System ist.

6. Verfahren zur Herstellung von Präparationen gemäß den Ansprüchen 1 bis 5, dadurch gekennzeichnet, daß man
a) 70 bis 95 Gew.-% monodisperse kugelförmige Oxidpartikel mit Partikeldurchmessern zwischen 10 nm und 10 µm, wobei die Standardabweichung des Partikeldurchmessers weniger als 10 % beträgt, mit
b) 30 bis 5 Gew.-% eines Bindemittels, welches bei Temperaturen zwischen 0 und 120 °C und einem Druck von 1 bis 0,1 bar nicht flüchtig ist, zusammen mit
c) einem bei erhöhter Temperatur und/oder reduziertem Druck flüchtigen Lösungsmittel homogen vermischt,
wobei das Bindemittel und Lösungsmittel im Massenverhältnis 1 : 1 bis 1 : 100 vorliegen , und dann aus der erhaltenen Suspension bzw. Dipersion das Lösungsmittel destillativ entfernt, wobei man ein freifließendes Pulver aus Agglomeraten mit Durchmesser zwischen 1 µm und 500 µm erhält.

7. Verfahren nach Anspruch 6, dadurch gekennzeichnet, daß man die Partikel in einem Gemisch aus Bindemittel und Lösungsmittel dispergiert.

8. Verfahren nach Anspruch 6, dadurch gekennzeichnet, daß man die Partikel zunächst in dem Lösungsmittel suspendiert und dann das Bindemittel eindispergiert.

9. Verfahren nach Anspruch 6 oder 7, dadurch gekennzeichnet, daß man das Lösungsmittel durch destillative Trocknung am Rotationsverdampfer, durch Dünnschichtverdampfung oder durch Sprühtrocknung entfernt.

## Claims

1. Preparations of
a) monodisperse spherical oxide particles having a particle diameter between 10 nm and 10 µm, the standard deviation of the particle diameter being less than 10%, and
b) a binder which is non-volatile at temperatures between 0 and 120°C under a pressure of 1 to 0.1 bar,
in the form of a free-flowing powder consisting of agglomerates having a diameter of from 1 µm to 500 µm, in which the particles are bonded to one another by the binder and in which 70 to 95% by weight of oxide particles and 30 to 5% by weight of binder are present, obtainable by mixing the oxide particles homogeneously with the binder in a corresponding ratio together with a solvent which is volatile at temperatures between 0 and 120°C under a pressure between 1 and 0.1 bar, the binder and solvent being present in a weight ratio of 1:1 to 1:100, and then removing the solvent from the resulting suspension or dispersion by distillation.

2. Preparations according to Claim 1, characterized in that the oxide particles comprise SiO₂, TiO₂, ZrO₂, Al₂O₃ or corresponding mixed oxides.

3. Preparations according to Claim 2, characterized in that the oxide particles are obtained by hydrolytic polycondensation of alkoxides.

4. Preparations according to Claim 3, characterized in that the oxide particles have a surface modification by covalently bonded organic groups.

5. Preparations according to Claims 1 to 4, characterized in that the binder is a soluble polymer or a polymerizable system.

6. Process for the preparation of preparations according to Claims 1 to 5, characterized in that
a) 70 to 95% by weight of monodisperse spherical oxide particles having particle diameters between 10 nm and 10 µm, the standard deviation of the particle diameter being less than 10%, are mixed homogeneously with
b) 30 to 5% by weight of a binder which is non-volatile at temperatures between 0 and 120°C under a pressure of 1 to 0.1 bar, together with
c) a solvent which is volatile at elevated temperature and/or under reduced pressure,
the binder and solvent being present in a weight ratio of 1:1 to 1:100, and the solvent is then removed from the resulting suspension or dispersion by distillation, a free-flowing powder of agglomerates with a diameter between 1 µm and 500 µm being obtained.

7. Process according to Claim 6, characterized in that the particles are dispersed in a mixture of binder and solvent.

8. Process according to Claim 6, characterized in that the particles are first suspended in the solvent and the binder is then dispersed in the suspension.

9. Process according to Claim 6 or 7, characterized in that the solvent is removed by drying by distillation on a rotary evaporator, by thin film evaporation or by spray drying.

## Revendications

1. Compositions
a) de particules sphériques d'oxyde, monodispersées, ayant un diamètre de particule compris entre 10 nm et 10 µm, l'écart-type du diamètre de particule étant inférieur à 10 %, et
b) d'un liant qui n'est pas volatil à des températures comprises entre 0 et 120°C et sous une pression de 1 à 0,1 bar,
sous forme d'une poudre s'écoulant librement, constituée d'agglomérats ayant un diamètre de 1 µm à 500 µm, dans lesquels les particules sont liées les unes aux autres par le liant et dans lesquels sont présents de 70 à 95 % en poids de particules d'oxyde et de 30 à 5 % en poids de liant, pouvant être obtenues par mélange de façon homogène des particules d'oxyde avec le liant en le rapport correspondant, conjointement avec un solvant volatil à des températures comprises entre 0 et 120°C et sous une pression comprise entre 1 et 0,1 bar, le liant et le solvant se trouvant en un rapport en masse de 1:1 à 1:100, et ensuite élimination du solvant par distillation de la suspension ou dispersion obtenue.

2. Compositions selon la revendication 1, caractérisées en ce que les particules d'oxyde consistent en SiO₂, TiO₂, ZrO₂, Al₂O₃ ou des mélanges de ceux-ci.

3. Compositions selon la revendication 2, caractérisées en ce que les particules d'oxyde sont obtenues par polycondensations hydrolytiques d'alcoolates.

4. Compositions selon la revendication 3, caractérisées en ce que les particules d'oxyde présentent une modification superficielle par des groupes organiques liés par covalence.

5. Compositions selon les revendications 1 à 4, caractérisées en ce que le liant est un polymère soluble ou un système polymérisable.

6. Procédé pour la préparation de compositions selon les revendications 1 à 5, caractérisé en ce que l'on mélange
a) 70 à 95 % en poids de particules sphériques d'oxyde, monodispersées, ayant des diamètres de particules compris entre 10 nm et 10 µm, l'écart-type du diamètre de particule étant inférieur à 10 %, avec
b) 30 à 5 % en poids d'un liant qui n'est pas volatil à des températures comprises entre 0 et 120°C et sous une pression de 1 à 0,1 bar, conjointement avec
c) un solvant volatil à haute température et/ou sous pression réduite,
le liant et le solvant se trouvant en un rapport en masse de 1:1 à 1:100, et ensuite on élimine le solvant par distillation de la suspension ou dispersion obtenue, pour obtenir une poudre, s'écoulant librement, d'agglomérats ayant un diamètre compris entre 1 µm et 500 µm.

7. Procédé selon la revendication 6, caractérisé en ce que l'on disperse les particules dans un mélange de liant et de solvant.

8. Procédé selon la revendication 6, caractérisé en ce que d'abord on met les particules en suspension dans le solvant et on ensuite on y disperse le liant.

9. Procédé selon la revendication 6 ou 7, caractérisé en ce que l'on élimine le solvant par séchage par distillation dans un évaporateur rotatif, par évaporation dans un évaporateur à couche mince ou par séchage par atomisation.
